# EUROPEAN PATENT APPLICATION

(11) **EP 2 405 333 A1**
(43) Date of publication of application: **11.01.2012**
(21) Application number: 10169076.6
(22) Date of filing: 09.07.2010
(51) Int. Cl.: G06F 3/048

(54) **Electronic device and method of tracking displayed information**

(71) Applicant: Research In Motion Limited, Waterloo, ON N2L 3W8 (CA)
(72) Inventor: Hymel, James Allen, Waterloo Ontario N2L 5Z5 (CA)
(74) Representative: Fennell, Gareth Charles

(57) **Abstract**

A method includes displaying a first segment of information in a first format on a display of an electronic device, tracking information previously displayed for a predetermined time period as tracked information, when any of the tracked information is subsequently displayed while scrolling, displaying the tracked information in a second format.

## Description

### FIELD OF TECHNOLOGY

The present disclosure relates to electronic devices, including but not limited to, portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in electronic devices are desirable.

### SUMMARY

A method includes displaying a first segment of information in a first format on a display of an electronic device, tracking information previously displayed for a predetermined time period as tracked information, when any of the tracked information is subsequently displayed, displaying the tracked information in a second format. A portable electronic device includes a display for displaying segments of information in a first format, a memory, and a processor operably coupled to the display and configured to track information previously displayed for a predetermined time period as tracked information, and when any of the previously displayed information is subsequently displayed while scrolling, to display the tracked information in a second format.

### BRIEF DESCRIPTION OF THE DRAWINGS

FIG. 1 is a block diagram of a portable electronic device in accordance with the present disclosure.

FIG. 2 is a flowchart illustrating a method of controlling a portable electronic device in accordance with the present disclosure.

FIG. 3, FIG. 4, and FIG. 5 illustrate examples of an electronic device during display of information in accordance with the present disclosure.

### DETAILED DESCRIPTION

The following describes an electronic device and a method including displaying a first segment of information in a first format on a display of an electronic device, tracking information previously displayed for a predetermined time period as tracked information, when any of the tracked information is subsequently displayed, displaying the tracked information in a second format.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

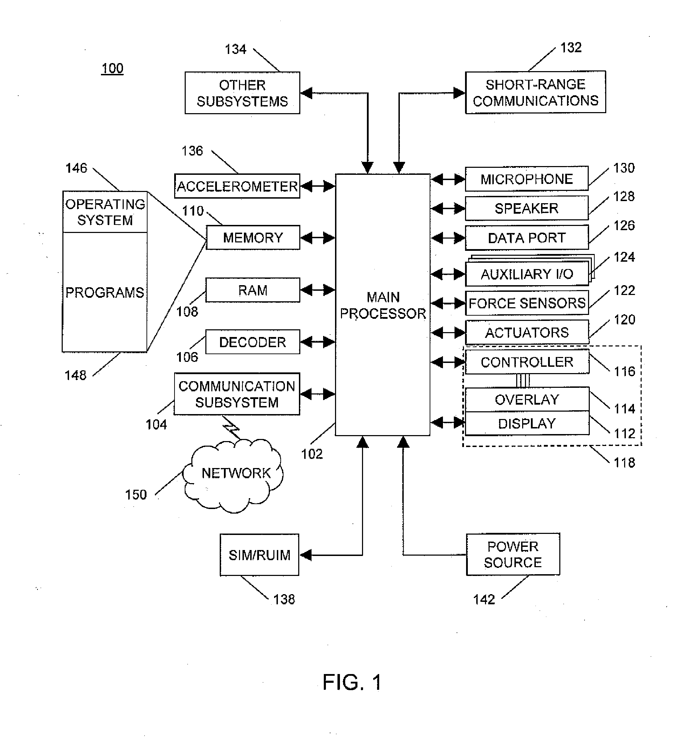

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. The controller 116 and/or the processor 102 may detect a touch by any suitable contact member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 that begins at an origin point and continues to a finishing point. A gesture may be long or short in distance and/or duration. Two points of the gesture may be utilized to determine a vector that describes a direction of the gesture.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback. When force is applied, the touch-sensitive display 118 is depressible, pivotable, and/or movable.

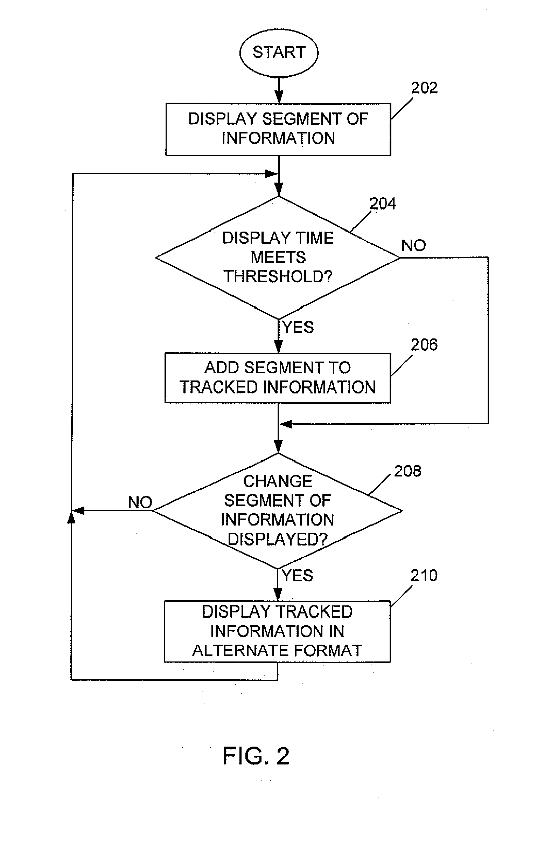

A flowchart illustrating a method of controlling an electronic device, such as the portable electronic device 100, is shown in FIG. 2. The method may be carried out, for example, by software such as an application stored in memory and executed, for example, by the processor 102. Coding of software for carrying out such a method is within the scope of a person of ordinary skill in the art given the present description. Computer-readable code executable by at least one processor of the portable electronic device to perform the method may be stored in a computer-readable medium. The method may contain additional or fewer processes than shown and/or described, and may be performed in a different order.

A segment of information is displayed 202 in an initial format on the touch-sensitive display 118 of the portable electronic device 100. The information may be information from an application, such as a web browser, contacts, email, calendar, music player, spreadsheet, word processing, operating system interface, and so forth. The information may be updated at various times, and the display of the information may be ongoing. When the display time of a segment of information is least equal to a predetermined time period, the segment of information is identified as tracked information and subsequently displayed in an alternate format. When a segment of information is displayed at 202, even when the duration of display of the segment of information is at least as long as the predetermined time period, no information is tracked yet and no information is displayed in the alternate format.

The duration of time that the segment of information is displayed may be compared 204 to the predetermined time period, referred to as a threshold value. The threshold value may be any suitable threshold value. The duration of time meets the threshold value when the duration of time is equal to or greater than the threshold value. The threshold value may be, for example, a period of time sufficient to read or scan a full screen of information. A default time may be set, e.g., 1 to 3 seconds, and may be entered, e.g., via a menu, by the user as a device parameter. Other methods, such as timers, may be utilized to determine when information is displayed long enough to be tracked.

The segment of information displayed is tracked 206. The segment of information may be tracked in any suitable manner to identify previously displayed information. For example, the segment of information may be tracked by adding the segment of information, or an identifier of the segment of information, to a store or list of information or identifiers. The store or list may be a cumulative list that is maintained for tracking previously displayed information, for example, for a document, webpage, email, or other information group. The store or list may be maintained, for example, in local memory 110 to identify the tracked information for display in the alternate format, e.g., during scrolling or subsequent display of the information when not scrolling, e.g., statically displayed.

When a display-change event that changes the segment of information to be displayed occurs 208, the tracked information is displayed 212 in an alternate format to identify any previously displayed information. The alternate format is different from the format utilized for information that has not been previously displayed, referred to as the initial format. Information that is not tracked is displayed in the initial format, while information that is tracked is displayed in the alternate format. A display-change event that changes the segment of the information that is displayed includes a scrolling input or request, whether fast or slow scrolling, page advance or decrement, or other input that displays a different segment of the information.

The event may be a scrolling input that includes detecting a gesture on the touch-sensitive display 118. Alternatively, scrolling input may be detected from, for example, a scroll wheel, an optical joystick, a navigation button or key, a trackball, and so forth. The updated, new, or different segment of information that is displayed at 214 is dependent on the extent of scrolling determined based on the scrolling input that is received at 210. The extent of the scrolling may be dependent on the length of the scrolling input in distance, the length of the scrolling input in time, the speed or rate of the scrolling input, or the type of scrolling input received. For scrolling input received from the touch-sensitive display 118, for example, the extent of scrolling may be dependent on the length of the gesture in distance, the length of the gesture, in time, or the speed or rate of the gesture.

Scrolling may be smooth scrolling or may be effectuated on a line-by-line basis, where one line of information appears to move off an end of the display 112 and another line appears to enter at an opposite end of the display 112. Scrolling may also be performed on a multiple line or page-by-page basis.

The tracked information is displayed during scrolling in the alternate format. Optionally, when scrolling stops for a given time period, or falls below a threshold rate of scrolling, the tracked information may be displayed at first in the alternate format, and thereafter in the initial format until the scrolling rate meets the threshold rate, e.g., is equal to or greater than the threshold rate. The alternate format may be any suitable format to identify a previously displayed segment or segments of information. Examples of suitable alternate formats include highlighting, a change in font color or grayscale, a demarcation bar or bars adjacent or near the information, a demarcation line or lines within the information, any other suitable format or any combination of formats.

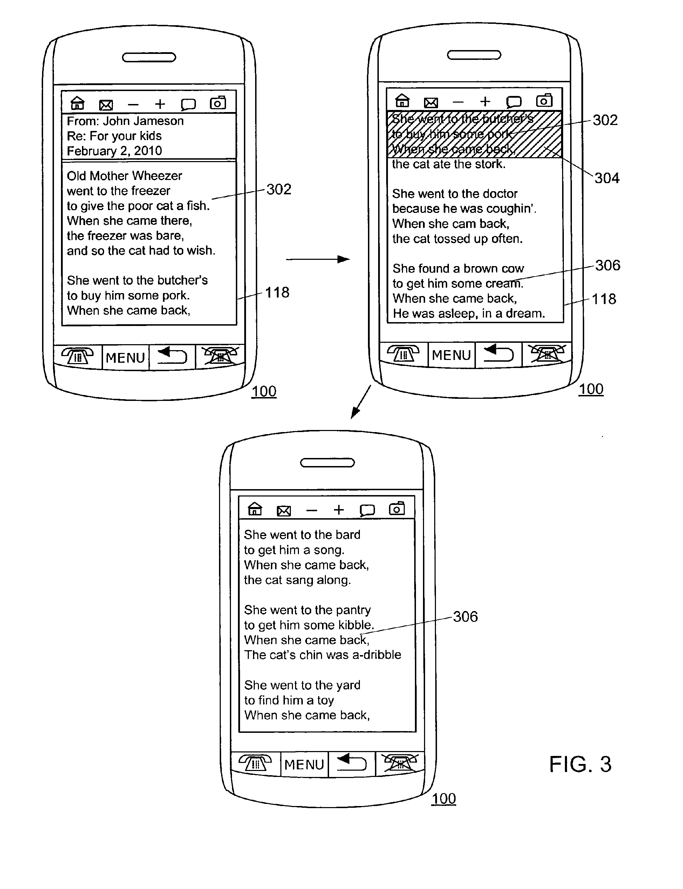

Examples of an electronic device displaying information are shown in FIG. 3, FIG. 4, and FIG. 5. In the examples of FIG. 3, FIG. 4, and FIG. 5, the portable electronic device 100 includes a touch-sensitive display 118 and is utilized for displaying information in an initial format in an email received at the portable electronic device 100. The amount of information included in the email is greater than the amount of information capable of being displayed on the display at one time. When the email is opened, a segment of the information is displayed as shown in the first illustration of each of FIG. 3, FIG. 4, and FIG. 5.

The segment of information displayed when the email is opened is indicated by the numeral 302. The duration of time that the segment of information 302 is displayed is greater than the threshold value, which may be, for example, two seconds. The segment of information 302 is added to the tracked information such that the segment of information 302 displayed in the first illustration of FIG. 3 is identified when a scrolling input is received. A scrolling input to change the segment of information is received and the segment of information 302, which is added to the tracked information, is displayed in the alternate format, in this example, grayed out, to identify the previously displayed segment of information 302. A further segment 306 of information is displayed, as shown in the second illustration of FIG. 3. In the example of FIG. 3, the tracked information 302 is grayed out to identify the previously displayed segment of information.

The duration of time that the further segment of information 306 is displayed is greater than the given time period, and display of tracked information in the alternate format 304 is discontinued, as shown in the third illustration of FIG. 3.

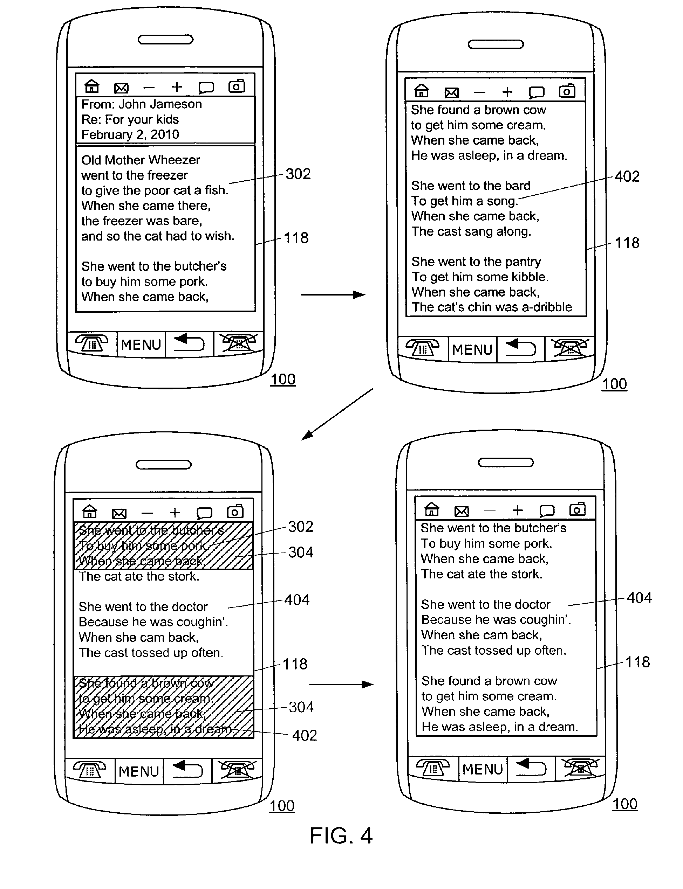

Another example of an electronic device displaying information is shown in FIG. 4. The segment of information 302 displayed when the email is opened is shown in the upper-left illustration of FIG. 4. The duration of time that the segment of information 302 is displayed is greater than the threshold value. The segment of information is added to the tracked information. A display-change event, such as a scrolling input is detected, and the segment of information 302 is displayed in the alternate format to identify the segment of information 302 during scrolling. The information is scrolled to another segment of information 402 shown in the upper-right illustration of FIG. 4. The segment of information 402 does not include tracked information, thus no part of the segment of information 402 is displayed in the alternate format.

The duration of time that this segment of information 402 is displayed is greater than the predetermined time or threshold value. The segment of information 402 is added to the tracked information.

A scrolling input is detected, which input scrolls in a direction opposite to the previous scrolling direction. The tracked information is displayed in the alternate format to identify the previously displayed information, including part of the segment of information 302 and part of the segment of information 402, during scrolling or static display, shown in the lower left illustration of FIG. 4, in addition to a new segment of information 404 not previously displayed.

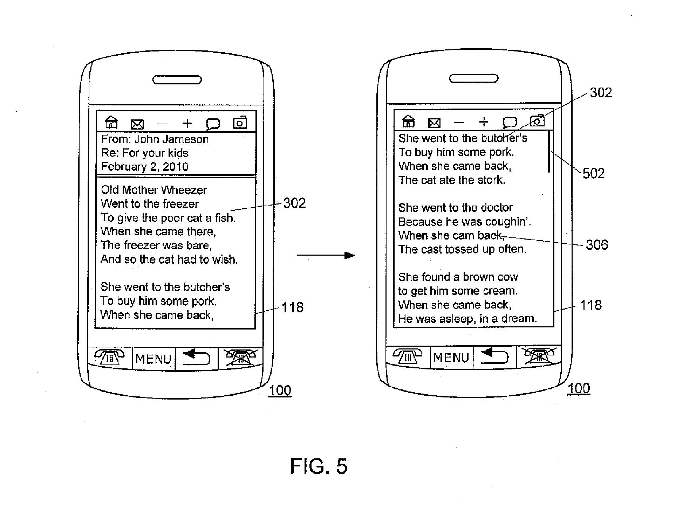

The duration of time that the new segment of information 404 is displayed is greater than the predetermined time period or threshold value. The new segment of information 404 is added to the tracked information. When scrolling stops for a given time period, e.g., 2 to 3 seconds, the tracked information is again displayed in the initial format, as shown in the lower-right illustration of FIG. 4. Another example of an electronic device during display of information is shown in FIG. 5. The segment of information 302 displayed when the email is opened is shown in the left illustration of FIG. 5. The duration of time that the segment of information 302 is displayed is greater than the predetermined time period or threshold value. The segment of information 302 is added to tracked information. A display-change event, such as a scrolling input, is detected. The information is scrolled to the another segment of information 306 shown in the right illustration of FIG. 5. The segment of information 306 includes tracked information from the segment of information 302. In the example of FIG. 5, the alternate format includes a demarcation bar 502 displayed on the right side of the previously displayed information.

In the examples described above, the information displayed includes information in an email. Information may be displayed in other applications, such as a web browser, word processor, and spreadsheet program, to name a few. Further, scrolling is not limited to scrolling in the up and down directions relative to the orientation of the information displayed. Scrolling may also include scrolling from left to right or right to left.

The control of the electronic device facilitates scrolling through information by identifying previously displayed information as tracked information to distinguish between the previously displayed information and information that has not been previously displayed. Identification of previously displayed information facilitates speed and accuracy of navigation, such as scrolling, through information that does not fit within the display of the electronic device at one instance in time. Device use time, and thus power consumption, are decreased.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying a first segment of information in a first format on a display of an electronic device;
tracking information previously displayed for a predetermined time period as tracked information;
when any of the tracked information is subsequently displayed, displaying the tracked information in a second format.

2. The method according to claim 1, wherein tracking comprises identifying the first segment as previously displayed information.

3. The method according to claim 1, wherein displaying the tracked information comprises displaying at least part of the first segment in the second format.

4. The method according to claim 1, wherein tracking comprises identifying the first segment as tracked information and identifying a second segment displayed subsequent to displaying the first segment as tracked information.

5. The method according to claim 4, wherein displaying the tracked information comprises displaying the first segment and the second segment in the second format.

6. The method according to claim 1, further comprising displaying information that is not tracked information in the first format.

7. The method according to claim 1, wherein tracking comprises maintaining a cumulative list of tracked information for a document.

8. The method according to claim 1, wherein the tracked information is displayed for a time period in the second format and in the first format after the time period.

9. The method according to claim 1, displaying the tracked information in the second format at least one of during scrolling and after scrolling has stopped.

10. The method according to claim 1, wherein the second format comprises highlighting.

11. The method according to claim 1, wherein the second format comprises added demarcation bars.

12. A computer-readable medium having computer-readable code executable by at least one processor of a portable electronic device to perform the method of claim 1.

13. An electronic device comprising:
a display for displaying segments of information in a first format;
memory;
a processor operably coupled to the display and configured to track information previously displayed for a predetermined time period as tracked information, and when any of the previously displayed information is subsequently displayed while scrolling, to display the tracked information in a second format.

14. The electronic device according to claim 13, wherein segments of tracked information are tracked by storing the tracked information.

15. The electronic device according to claim 13, wherein the processor is further configured to display information that is not tracked information in the first format.

16. The electronic device according to claim 13, wherein the processor maintains a cumulative list of tracked information for a document.

17. The electronic device according to claim 13, wherein the tracked information is displayed for a time period in the second format and in the first format after the time period.

18. The electronic device according to claim 13, wherein after scrolling has stopped, the tracked information is displayed in the second format.

19. The electronic device according to claim 13, wherein the second format comprises highlighting.

20. The electronic device according to claim 13, wherein the second format comprises added demarcation bars.

21. A method comprising:
displaying a first segment of information in a first format on a display of an electronic device;
scrolling to a second segment of the information;
displaying a third segment of the information, which third segment comprises at least some of the first segment, and displaying the at least some of the first segment in a second format.

## Amended claims

### Amended claims in accordance with Rule 137(2) EPC.

**1.** A method comprising:
displaying a first segment of information in a first format on a display of an electronic device;
tracking information previously displayed for a predetermined time period as tracked information;
when any of the tracked information is subsequently displayed, displaying the tracked information in a second format.

**2.** The method according to claim 1, wherein tracking comprises identifying the first segment as previously displayed information.

**3.** The method according to claim 1, wherein displaying the tracked information comprises displaying at least part of the first segment in the second format.

**4.** The method according to claim 1, wherein tracking comprises identifying the first segment as tracked information and identifying a second segment displayed subsequent to displaying the first segment as tracked information.

**5.** The method according to claim 4, wherein displaying the tracked information comprises displaying the first segment and the second segment in the second format.

**6.** The method according to claim 1, further comprising displaying information that is not tracked information in the first format.

**7.** The method according to claim 1, wherein tracking comprises maintaining a cumulative list of tracked information for a document.

**8.** The method according to claim 1, wherein the tracked information is displayed for a time period in the second format and in the first format after the time period.

**9.** The method according to claim 1, displaying the tracked information in the second format at least one of during scrolling and after scrolling has stopped.

**10.** The method according to claim 1, wherein the second format comprises highlighting.

**11.** The method according to claim 1, wherein the second format comprises added demarcation bars.

**12.** A computer-readable medium having computer-readable code executable by at least one processor of a portable electronic device to perform the method of any of claims 1 to 11.

**13.** An electronic device comprising:
a display for displaying segments of information in a first format;
memory;
a processor operably coupled to the display and configured to track information previously displayed for a predetermined time period as tracked information, and when any of the previously displayed information is subsequently displayed while scrolling, to display the tracked information in a second format.

**14.** The electronic device according to claim 13, wherein segments of tracked information are tracked by storing the tracked information.

**15.** The electronic device according to claim 13, wherein the processor is further configured to display information that is not tracked information in the first format.

**16.** The electronic device according to claim 13, wherein the processor maintains a cumulative list of tracked information for a document.

**17.** The electronic device according to claim 13, wherein the tracked information is displayed for a time period in the second format and in the first format after the time period.

**18.** The electronic device according to claim 13, wherein after scrolling has stopped, the tracked information is displayed in the second format.

**19.** The electronic device according to claim 13, wherein the second format comprises highlighting.

**20.** The electronic device according to claim 13, wherein the second format comprises added demarcation bars.
